(19) Europäisches Patentamt
European Patent Office
Office européen des brevets

(11) EP 3 094 175 B1

(12) # EUROPEAN PATENT SPECIFICATION

(45) Date of publication and mention of the grant of the patent:
**06.05.2020 Bulletin 2020/19**

(21) Application number: **15736986.9**

(22) Date of filing: **14.01.2015**

(51) Int Cl.:
***A01N 43/40*** *(2006.01)* ***A01N 39/02*** *(2006.01)*
***A01P 13/02*** *(2006.01)*

(86) International application number:
**PCT/US2015/011281**

(87) International publication number:
**WO 2015/108890 (23.07.2015 Gazette 2015/29)**

(54) **HERBICIDAL COMPOSITION CONTAINING 4-AMINO-3-CHLORO-6-(4-CHLORO-2-FLUORO-3-METHOXYPHENYL)PYRIDINE-2-CARBOXYLIC ACID, FLUROXYPYR AND MCPA**

HERBIZIDE ZUSAMMENSETZUNG MIT 4-AMINO-3-CHLORO-6-(4-CHLORO-2-FLUORO-3-METHOXYPHENYL)PYRIDIN-2-CARBONSÄURE, FLUROXYPYR UND MCPA

COMPOSITION HERBICIDE CONTENANT DE L'ACIDE 4-AMINO-3-CHLORO-6-(4-CHLORO-2-FLUORO-3-MÉTHOXYPHÉNYL)PYRIDINE-2-CARBOXYLIQUE, DU FLUROXYPYR ET DU MCPA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2014 US 201461927829 P**

(43) Date of publication of application:
**23.11.2016 Bulletin 2016/47**

(73) Proprietor: **Dow AgroSciences LLC**
**Indianapolis, IN 46268 (US)**

(72) Inventors:
- **DEGENHARDT, Rory**
  **Indianapolis, IN 46268 (US)**
- **MCGREGOR, Bill**
  **Beaumont, AB T4X 1H3 (CA)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-2015/054560 WO-A1-2015/054561**
**WO-A2-2009/029518 US-A1- 2012 015 808**
**US-A1- 2012 015 811 US-A1- 2012 149 572**
**US-A1- 2013 143 738 US-A1- 2013 143 739**
**US-A1- 2013 143 739**

- **DATABASE CA [Online] CHEMICAL ABSTRACTS SERVICE, COLUMBUS, OHIO, US; ZHENG, JINGMIN ET AL: "Florasulam, fluroxypyr, MCPA-isooctyl formulation as synergistic herbicide for use in wheat field", XP002771662, retrieved from STN Database accession no. 2013:657379 & CN 103 053 554 A (SHAANXI NORSYN CROP TECHNOLOGY CO) 24 April 2013 (2013-04-24)**
- **DATABASE CA [Online] CHEMICAL ABSTRACTS SERVICE, COLUMBUS, OHIO, US; ZHANG, FUDOU ET AL: "Preparation of synergistic herbicides containing 2,4-D and fluroxypyr for controlling Mikania micrantha", XP002771663, retrieved from STN Database accession no. 2010:63819 & CN 101 622 990 A (AGRICULTURE ENVIRONMENT & RESO) 13 January 2010 (2010-01-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 094 175 B1

## Description

### CROSS REFERENCE TO RELATED APPLICATIONS

This application claims the benefit of U.S. Provisional Patent Application Serial No. 61/927,829 filed January 15, 2014.

### BACKGROUND

The protection of crops from weeds and other vegetation which inhibit crop growth is a recurring problem in agriculture. To help combat this problem, a variety of chemicals and chemical formulations effective in the control of such unwanted growth have been synthesized and evaluated. Different classes of chemical herbicides have been disclosed in the literature and a large number are in commercial use. US 2013/0143739 A1 relates to synergistic herbicidal compositions comprising (a) halauxifen or, with respect to its carboxylic acid moiety, an agriculturally acceptable salt, ester, or amide thereof, and (b) fluroxypyr or, with respect to its carboxylic acid moiety, an agriculturally acceptable salt, ester, or amide thereof. US 2013/0143738 A1 relates to synergistic herbicidal compositions comprising (a) halauxifen or, with respect to its carboxylic acid moiety, an agriculturally acceptable salt, ester, or amide thereof, and (b) 2,4-D or, with respect to its carboxylic acid moiety, an agriculturally acceptable salt, ester, or amide thereof. WO 2015/054561 A1, a document according to Art. 54(3) EPC, relates to aqueous herbicidal concentrates comprising a water soluble salt of a synthetic auxin herbicide and a second, water insoluble herbicide, wherein said second herbicide may represent, among others, a mixture of halauxifen-methyl and fluroxypyr-meptyl. WO 2015/054560 A1, a document according to Art. 54(3) EPC, relates to a stable aqueous herbicidal composition comprising a water soluble salt of 2,4-D and a second herbicide, which is halauxifen-methyl, fluroxypyr-meptyl, or a mixture thereof. WO 2009/029518 A2 relates to synergistic herbicidal compositions containing certain pyridine or pyrimidine carboxylic acids and certain cereal and rice herbicides and discloses, among others, a compositions comprising a mixture of halauxifen triethylammonium salt and MCPA. CN 101662990 relates to a synergistic composition comprising 2,4-D and fluroxypyr. CN 103053554 relates to a synergistic composition comprising florasulam, fluroxypyr and MCPA-isooctyl. However, there remains a need for improved methods that are effective in controlling undesirable vegetation.

### SUMMARY

The invention is directed to methods of controlling undesirable vegetation as defined in claim 1.

In some embodiments the present methods use compositions for controlling undesirable vegetation containing a mixture containing synergistic, herbicidally effective amounts of:

(a) a compound of the formula (I) or, with respect to its carboxylic acid moiety, an agriculturally acceptable salt, ester, or amide thereof

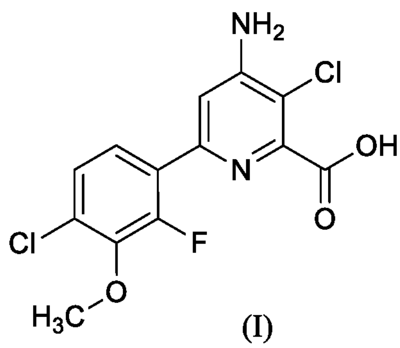

(I) ;

(b) fluroxypyr or, with respect to its carboxylic acid moiety, an agriculturally acceptable salt, ester, or amide thereof

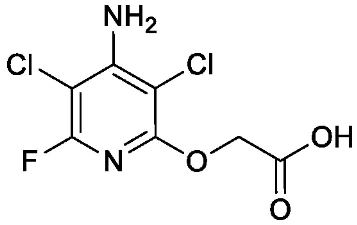

;

and

(c) one or more phenoxy auxins or agriculturally acceptable salts, esters, and/or amides thereof,

wherein the phenoxy auxin is MCPA and the carboxylic acid equivalent weight ratio of (a) to (b) to (c) is from 1:12:60 to 1:18:80.

Methods of controlling undesirable vegetation including contacting the undesirable vegetation, the area adjacent to the undesirable vegetation, water, or soil with a composition containing a mixture containing synergistic, herbicidally effective amounts of a compound of formula (I) or, with respect to its carboxylic acid moiety, an agriculturally acceptable salt, ester, or amide thereof; fluroxypyr or, with respect to its carboxylic acid moiety, an agriculturally acceptable salt, ester, or amide thereof; and one or more phenoxy auxins or, an agriculturally acceptable salt, ester, or amide thereof, wherein the phenoxy auxin is MCPA and the carboxylic acid equivalent weight ratio of (a) to (b) to (c) is from 1:12:60 to 1:18:80, and wherein the undesirable vegetation is hemp-nettle (*Galeopsis tetrahit*, GAETE), common ragweed (*Ambrosia artemisiifolia*, AMBEL), absinth wormwood *(Artemisia absinthium,* ARTAB), or volunteer canola *(Brassica napus,* BRSNN) are described herein.

In some embodiments, (a) is the methyl ester or triethylammonium salt of the compound of formula (I). In some embodiments, (b) is the 1-methylheptyl ester of fluroxypyr. In some embodiments, the phenoxy auxin is MCPA 2-ethylhexyl ester. In one embodiment, the composition includes (a) the methyl ester of the compound of formula (I) or halauxifen-methyl, (b) the 1-methylheptyl ester of fluroxypyr or fluroxypyr-meptyl, and (c) MCPA 2-ethylhexyl ester.

## DETAILED DESCRIPTION

### I. Definitions

As used herein, the compound of formula (I) is halauxifen or 4-amino-3-chloro-6-(4-chloro-2-fluoro-3-methoxyphenyl)-2-pyridineccarboxylate and has the following structure:

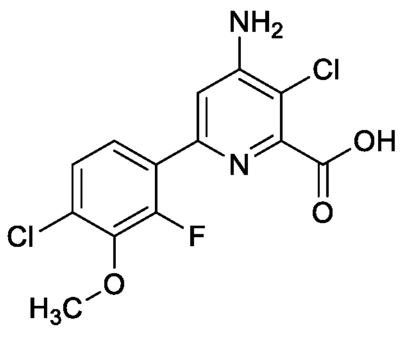

.

Exemplary chemical forms of halauxifen include, but are not limited to, for example, halauxifen-methyl, which is methyl 4-amino-3-chloro-6-(4-chloro-2-fluoro-3-methoxyphenyl)-2-pyridinecarboxylate and has the following structure:

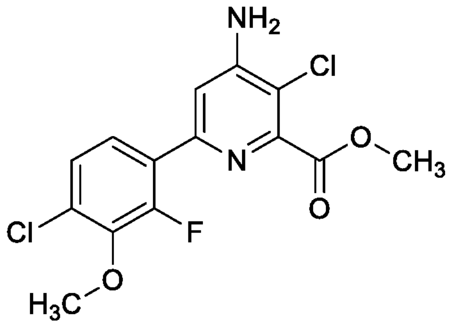

.

Halauxifen is described in in U.S. Patent 7,314,849 B2. Exemplary uses of halauxifen include, but are not limited to, controlling annual grass weeds including *Setaria, Pennisetum* and *Echinochloa;* broadleaf weeds such as *Papaver* spp., *Erodium* spp., *Galium* spp., *Galeopsis* spp., *Lamium* spp., *Kochia* spp., *Malva* spp., *Amaranthus* spp., *Aeschynomene* spp., *Sesbania* spp., *Stellaria* spp. and *Monochoria* spp.; and sedge species such as *Cyperus* spp. and *Scirpus*/*Schoenoplectus* spp. Halauxifen-methyl may be used as other forms, *e.g*., halauxifen $K^+$ (potassium 4-amino-3-chloro-6-(4-chloro-2-fluoro-3-methoxyphenyl) picolinate), which has the following structure:

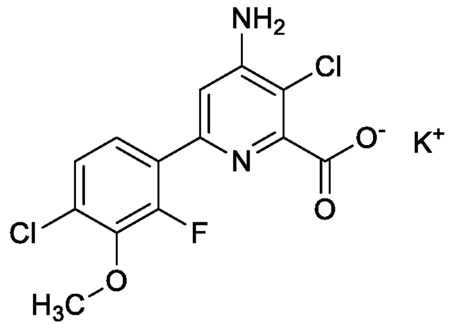

The compound of formula (I) can be in the form of an ester including, but not limited to, a $C_1$-$C_4$ alkyl, *e.g.,* a methyl ester, or benzyl ester.

As used herein, fluroxypyr is 2-[(4-amino-3,5-dichloro-6-fluoro-2-pyridinyl)oxy]acetic acid and has the following structure:

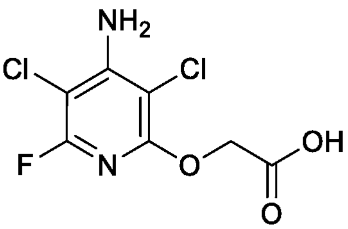

.

Exemplary uses of fluroxypyr are described in Tomlin, C. D. S., Ed. The Pesticide Manual: A World Compendium, 15th ed.; BCPC: Alton, 2009 (hereafter "The Pesticide Manual, Fifteenth Edition, 2009."). Exemplary uses of fluroxypyr include, but are not limited to, post-emergence foliar application to control broadleaf weeds, *e.g.,* in small grain crops, to control *Rumex* spp., *Galium* spp., *Kochia* spp., *Stellaria* spp. and *Urtica dioica* in pastures, and to control *Trifolium repens* in amenity grassland. Other exemplary uses include, but are not limited to, controlling herbaceous and woody broadleaf weeds, *e.g.,* in orchards and plantation crops, and broadleaf brush, *e.g.,* in conifer forests. Exemplary chemical forms of fluroxypyr include, but are not limited to, for example, fluroxypyr-meptyl or fluroxypyr MHE, which is 1-methylheptyl 2-[(4-amino-3,5-dichloro-6-fluoro-2-pyridinyl)oxy]acetate and has the following structure:

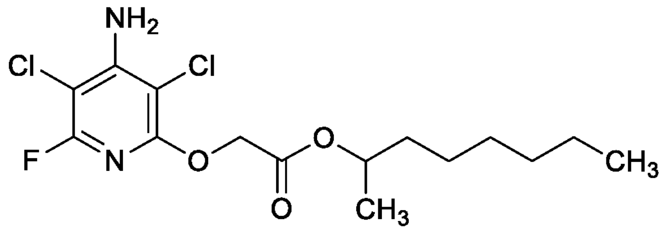

.

As used herein, MCPA is 2-(4-chloro-2-methylphenoxy)acetic acid and has the following structure:

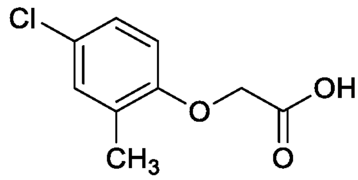

.

Exemplary uses of MCPA are described in The Pesticide Manual, Fifteenth Edition, 2009. Exemplary uses of MCPA include, but are not limited to, post-emergence control of annual and perennial broadleaf weeds, *e.g.,* in cereals, herbage seed crops, flax, rice vines, peas, potatoes, asparagus, grassland, turf, under fruit trees, and roadside verges/shoulders and embankments. Other exemplary uses include, but are not limited to, controlling broadleaf and woody weeds, *e.g.,* in forestry, as well as aquatic broadleaf weeds. Exemplary agriculturally acceptable salts or esters of MCPA include, but are not limited to, sodium salts, potassium salts, ammonium salts or substituted ammonium salts, in particular mono-, di- and tri-$C_1$-$C_8$ - alkylammonium salts such as methyl ammonium, dimethylammonium and isopropylammonium (e.g., triisopropanolammonium), mono-, di- and tri-hydroxy-$C_2$-$C_8$-alkylammonium salts such as hydroxyethylammonium, di(hydroxyethyl)ammonium, tri(hydroxyethyl)ammonium, hydroxypropylammonium, di(hydroxypropyl)ammonium and tri(hydroxypropyl)ammonium salts, diglycolamine salts, and esters, in particular its $C_1$-$C_8$-alkyl esters and $C_1$-$C_4$-alkoxy -$C_2$-$C_4$-alkyl esters, such as methyl esters, ethyl esters, isopropyl, butyl, hexyl, heptyl, isoheptyl, isooctyl, 2-ethylhexyl and butoxyethyl esters. Exemplary agriculturally acceptable esters and salts of MCPA include, but are not limited to, the ethyl, isopropyl, butyl, isobutyl, isooctyl, 2-ethylhexyl, and 2-butoxyethyl esters of MCPA, and the sodium, isopropylammonium, dimethylammonium, diethanolammonium, diisopropylammonium, triethanol-ammonium, triisopropylammonium, triisopropanolammonium, and choline salts of MCPA, and mixtures thereof. In one preferred embodiment, the MCPA is in the form of a 2-ethylhexyl ester (MCPA EHE), which is 2-ethylhexyl 2-(4-chloro-2-methylphenoxy)acetate and has the following structure:

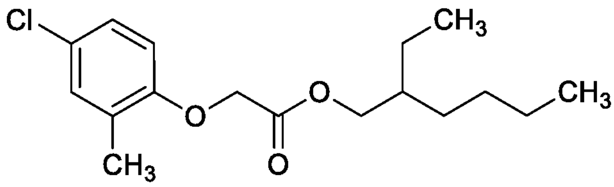

.

The term herbicide is used herein to mean an active ingredient that kills, controls or otherwise adversely modifies the growth of plants. As used herein, a herbicidally effective or vegetation controlling amount is an amount of active ingredient that causes a "herbicidal effect", *i.e.* an adversely modifying effect and includes deviations from natural development, killing, regulation, desiccation, and retardation.

As used herein, the terms "plants" and "vegetation" include, but are not limited to, germinant seeds, emerging seedlings, plants emerging from vegetative propagules, and established vegetation.

As used herein, immature vegetation refers to small vegetative plants prior to reproductive stage, and mature vegetation refers to vegetative plants during and after the reproductive stage.

**II. Compositions used in the present methods**

**A. Synergistic mixtures**

In some embodiments the present methods use herbicidal compositions containing a mixture containing synergistic, herbicidally effective amounts of:

(a) a compound of formula (I) or, with respect to the carboxylic acid moiety, an agriculturally acceptable salt, ester or amide thereof

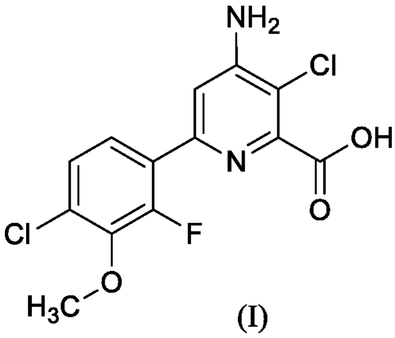

(I) ;

(b) fluroxypyr, or with respect to its carboxylic acid moiety, an agriculturally acceptable salt, ester, or amide thereof

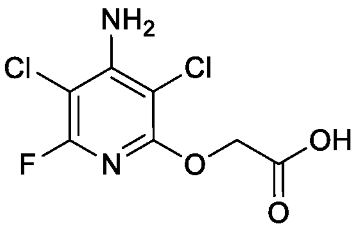

;

and

(c) one or more phenoxy auxins or an agriculturally acceptable salt, ester, or amide thereof,

wherein the phenoxy auxin is MCPA and the carboxylic acid equivalent weight ratio of (a) to (b) to (c) is from 1:12:60 to 1:18:80.

In some embodiments, (a) is the methyl ester or triethylammonium salt of the compound of formula (I). In some embodiments, (b) is the 1-methylheptyl ester of fluroxypyr or fluroxypyr-meptyl. In some embodiments, the phenoxy auxin is MCPA 2-ethylhexyl ester. In other embodiments, (a) is the methyl ester of the compound of formula (I) or halauxifen-methyl, (b) is the 1-methylheptyl ester of fluroxypyr or fluroxypyr-meptyl, and (c) is MCPA 2-ethylhexyl ester.

Furthermore, the above described combination of a compound of formula (I) or, with respect to the carboxylic acid moiety, an agriculturally acceptable salt, ester or amide thereof; fluroxypyr, or with respect to its carboxylic acid moiety, an agriculturally acceptable salt, ester, or amide thereof; and MCPA or an agriculturally acceptable salt, ester, or amide thereof exhibits synergism, *i.e.*, the herbicidal active ingredients are more effective in combination than when applied individually. Synergism has been defined as "an interaction of two or more factors such that the effect when combined is greater than the predicted effect based on the response of each factor applied separately." Shaner, D. L., Ed. Herbicide Handbook, 10th ed. Lawrence: Weed Science Society of America, 2014. In certain embodiments, the compositions exhibit synergy as determined by Colby's equation. Colby, S. R. Calculation of the synergistic and antagonistic response of herbicide combinations. Weeds 1967, 15, 20-22.

Herbicidal activity is exhibited by the compounds when they are applied pre- and post-emergence directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, the amount of chemical applied, and combinations thereof. These and other factors can be adjusted to promote non-selective or selective herbicidal action. In some embodiments, the compositions used herein are applied as a post-emergence or pre-emergence application to crops and weeds grown in soil, or in-water application to flooded paddy rice or water bodies (e.g., ponds, lakes and streams), to relatively immature to mature undesirable vegetation to achieve the maximum control of weeds. In some embodiments, the compositions and methods are applied prior to planting the crop. In certain embodiments, the compositions and methods are applied via

burn-down.

In some embodiments, the compositions or components of the compositions used herein are applied as a post-emergence foliar application to immature, undesirable vegetation to achieve the maximum control of weeds.

In some embodiments, the methods provided herein are utilized to control weeds in crops, *e.g.,* to cereals, rice, perennial plantation crops, corn, sorghum, oilseed rape, turf, range and pasture, industrial vegetation management (IVM), rights-of-way and in any auxinic- tolerant crops. In some embodiments, the methods are utilized to control weeds in cereals or oilseed rape.

The compositions can be applied to weeds or their locus thereof, including but not limited to foliage, soil or water, by the use of conventional ground or aerial dusters, sprayers, and granule applicators, by addition to irrigation or paddy water, and by other conventional means known to those skilled in the art.

In one embodiment, the concentration of the active ingredients in the synergistic composition of the present disclosure is from 0.001 to 98 percent by weight, and in another embodiment, concentrations from 0.01 to 90 percent by weight are employed. In compositions designed to be employed as concentrates, the active ingredients are present in a concentration from 2 to 98 weight percent, and in another embodiment, from 5 to 90 weight percent. In one embodiment, such compositions are diluted with an inert carrier, such as water, before application. The diluted compositions used herein that are applied to weeds or the loci of weeds contain 0.005 to 5 weight percent active ingredient (ai) and, in another embodiment contain 0.01 to 2.0 weight percent ai.

In the compositions and methods described herein, the compound of formula (I) or an ester, amide, or salt thereof is used in combination with fluroxypyr or an ester, amide, or salt thereof, and MCPA or esters, amides, or salts thereof. The carboxylic acid equivalent weight ratio is from about 1:12:60 to about 1:18:80 *(i.e.,* 1:(12-18):(60-80)). In some embodiments, the carboxylic acid equivalent weight ratio is from about 1:14:60 to about 1:16:80 *(i.e.*, 1:(14-16):(60-80)). In some embodiments, the carboxylic acid equivalent weight ratio is about 1:15:60 to about 1:15:80 *(i.e.,* 1:15:(60-80)). In some embodiments, the carboxylic acid equivalent weight ratio is from about 1:12:65 to about 1:18:75 *(i.e.,* 1:(12-18):(65-75)). In some embodiments, the carboxylic acid equivalent weight ratio is from about 1:14:65 to about 1:16:75 *(i.e.,* 1:(14-16):(65-75)). In some embodiments, the carboxylic acid equivalent weight ratio is from about 1:15:65 to about 1:15:75 *(i.e.,* 1:15:(65-75)). In some embodiments, the carboxylic acid equivalent weight ratio is from about 1:12:70 to about 1:18:70 *(i.e.,* 1:(12-18):70). In some embodiments, the carboxylic acid equivalent weight ratio is from about 1:14:70 to about 1:16:70 *(i.e.,* 1:(14-16):70). In some embodiments, the carboxylic acid equivalent weight ratio is about 1:15:70.

The rates at which the components of the compositions used in the methods are applied will depend upon the particular type of weed to be controlled, the degree of control required, and the timing and method of application. In one embodiment, the composition used herein can be applied at an application rate of from about 25 grams acid equivalent per hectare (g ae/ha) to about 610 g ae/ha based on the total amount of active ingredients in the composition, and in another embodiment from about 52 g ae/ha to about 235 g ae/ha. In some embodiments, the fluroxypyr or salt, ester, or amide is applied at a rate from about 25 g ae/ha to about 560 g ae/ha and the compound of formula (I) is applied at a rate from about 0.5 g ae/ha to about 50 g ae/ha. In another embodiment, the fluroxypyr, or salt, ester, of amide thereof is applied at a rate from about 50 g ae/ha to about 200 g ae/ha, and the compound of formula (I) is applied at a rate from about 2 g ae/ha to about 35 g ae/ha. In some embodiments, the compound of formula (I) is applied at a rate of less than 10 g ae/ha.

In some embodiments, the compound of formula (I) or ester, amide, or salt thereof is applied at a rate from about 1 g ae/ha to about 70 g ae/ha; the fluroxypyr or an ester, amide, or salt thereof is applied at a rate of about 2.5 g ae/ha to about 400 g ae/ha; and MCPA or agriculturally acceptable ester, amide, or salt thereof is applied at a rate from about 200 g ae/ha to about 560 g ae/ha. In another embodiment, the compound of formula (I) or an ester, amide, or salt thereof is applied at a rate from about 2 g ae/ha to about 35 g ae/ha; the fluroxypyr or an ester, amide, or salt thereof is applied at a rate of about 5 g ae/ha to about 200 g ae/ha; and MCPA or agriculturally acceptable ester, amide, or salt thereof is applied at a rate from about 280 g ae/ha to about 450 g ae/ha. In another embodiment, the compound of formula (I) or an ester, amide, or salt thereof is applied at a rate from about 2 g ae/ha to about 35 g ae/ha; the fluroxypyr or an ester, amide, or salt thereof is applied at a rate of about 5 g ae/ha to about 200 g ae/ha; and MCPA or agriculturally acceptable ester, amide, or salt thereof is applied at a rate from about 350 g ae/ha to about 420 g ae/ha.

In certain embodiments, the methods utilize the methyl ester of the compound of formula (I); the meptyl ester of fluroxypyr; and the 2-ethylhexyl ester of MCPA. In one embodiment, the methyl ester of the compound of formula (I) is applied at a rate from about 2 g ae/ha to about 35 g ae/ha; the meptyl ester of fluroxypyr is applied at a rate of about 5 g ae/ha to about 150 g ae/ha; and the 2-ethylhexyl ester of MCPA is applied at a rate of about 350 g ae/ha to about 420 g ae/ha. In another embodiment, the methyl ester of the compound of formula (I) is applied at a rate of about 5 g ae/ha; the meptyl ester of fluroxypyr is applied at a rate of about 77 g ae/ha; and the MCPA 2-ethylhexyl ester is applied at a rate of about 350 g ae/ha.

The components of the mixtures used herein can be applied either separately, sequentially, tank-mixed or as part of a mixture or multipart herbicidal system. In some embodiments, both components may be formulated together

(*e.g.*, in the same formulation) or separately (e.g., in separate formulations) and applied simultaneously. In another embodiment, one or more components may be formulated separately and the components applied sequentially. In the methods described herein, the compound of formula (I) or derivative thereof, fluroxypyr or derivative thereof, and MCPA or derivatives thereof are applied simultaneously, *e.g.*, in the form of an intact composition.

The compositions exhibit synergy against hemp-nettle (*Galeopsis tetrahit*, GAETE), common ragweed *(Ambrosia artemisiifolia*, AMBEL), absinth wormwood (*Artemisia absinthium*, ARTAB), or volunteer canola *(Brassica napus,* BRSNN). In one embodiment, the combination of the compound of formula (I) or an ester, amide, or salt thereof, fluroxypyr or an ester, amide, or salt thereof, and MCPA or esters, amides, or salts thereof in the above ratio exhibits greater than about 5, 6, 7, 8, 9, 10, 12, 15, 18, 20, 22, 25, 28, 30, 35, 40, 45, 50, 55, or 60% control compared to the Colby predicted value at 14-63 days after application (DAA).

**B. Other actives**

The mixtures used herein can be applied in conjunction with one or more other herbicides to control a wider variety of undesirable vegetation. When used in conjunction with other herbicides, the composition can be formulated with the other herbicide or herbicides, tank-mixed with the other herbicide or herbicides or applied sequentially with the other herbicide or herbicides. Some of the herbicides that can be employed in conjunction with the compositions and methods described herein include, but are not limited to, acid, salt, and ester forms of the following herbicides: 4-CPA, 4-CPB, 4-CPP, 3,4-DA, 2,4-DB, 3,4-DB, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron- methyl, bensulide, bentazon, benthiocarb, benzadox, benzfendizone, benzipram, benzobicyclon, benzofenap, benzofluor, benzoylprop, benzthiazuron, bicyclopyrone, bifenox, bilanafos, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone (e.g., carfentrazone-ethyl), CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon (*e.g.*, cinidon-ethyl), cinmethylin, cinosulfuron, cisanilide, clacyfos, clethodim, cliodinate, clodinafop-propargyl, clofop, clomazone, clomeprop, cloprop, cloproxydim, clopyralid, cloransulam, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop (*e.g.*, cyhalofop-butyl), cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethbenzamide, ethalfluralin, ethametsulfuron, ethidimuron, ethiolate, ethobenzanid, ethofumesate, ethoxyfen, ethoxysulfuron, etinofen, etnipromid, etobenzanid, EXD, fenasulam, fenoprop, fenoxaprop, fenoxaprop-P (*e.g.*, fenoxaprop-P-ethyl), fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop, fluazifop-P (*e.g.*, fluazifop-P-butyl), fluazolate, flucarbazone, flucetosulfuron, fluchloralin, flufenacet, flufenican, flufenpyr (e.g., flufenpyr-ethyl), flumetsulam, flumezin, flumiclorac (*e.g.*, flumiclorac-pentyl), flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glufosinate-ammonium, glufosinate, halauxifen, halosafen, halosulfuron (e.g., halosulfuron-methyl), haloxydine, haloxyfop-methyl, haloxyfop-P (*e.g.*, haloxyfop-P-methyl), hexachloroacetone, hexaflurate, hexazinone, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron,

OCH, orbencarb, *ortho*-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham (*e.g.*, phenmedipham-ethyl), phenobenzuron, phenylmercury acetate, picloram, picolinafen, pinoxaden, piperophos, potassium arsenite, potassium azide, potassium cyanate, pretilachlor, primisulfuron (*e.g.*, primisulfuron-methyl), procyazine, prodiamine, profluazol, profluralin, profoxydim, proglinazine, prohexadione-calcium, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen (*e.g.*, pyraflufen-ethyl), pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P (*e.g.*, quizalofop-P-ethyl), rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiafenacil, tiocarbazil, tioclorim, tolpyralate, topramezone, tralkoxydim, triafamone, tri-allate, triasulfuron, triaziflam, tribenuron (*e.g.*, tribenuron-methyl), tricamba, triclopyr (*e.g.*, triclopyr choline salt), tridiphane, trietazine, trifloxysulfuron, trifludimoxazin, trifluralin, triflusulfuron, trifop, trifopsime, trihydroxytriazine, trimeturon, tripropindan, tritac, tritosulfuron, vernolate, xylachlor, benzyl 4-amino-3-chloro-5-fluoro-6-(4-chloro-2-fluoro-3-methoxyphenyl)pyridine-2-carboxylate and salts, choline salts, esters, optically active isomers and mixtures thereof.

**C. Safeners**

In some embodiments, the compositions used herein are employed in combination with one or more herbicide safeners, such as AD-67 (MON 4660), benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148 and *N*-phenylsulfonylbenzoic acid amides, to enhance their selectivity. In one embodiment, cloquintocet (*e.g.*, acid or mexyl form) is used as a safener for the compositions used herein.

**D. Adjuvants/Carriers**

In some embodiments, the compositions used herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, microcapsules or wettable powders, or liquids, such as, for example, emulsifiable concentrates, solutions, emulsions or suspensions. They can also be provided as a pre-mix or can be tank mixed or applied sequentially.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N*,*N*-dimethyl alkylamides, dimethyl sulfoxide, liquid fertilizers and the like. In some embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

In some embodiments, the compositions used herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the formulations are described, *inter alia,* in McCutcheon's Detergents and Emulsifiers Annual, MC Publishing Corporation: Ridgewood, NJ, 1998 and in Encyclopedia of Surfactants, Vol. I-III, Chemical Publishing Company: New York, 1980-81. Surface-active agents include, but are not limited to salts of alkyl sulfates, such as diethanolammonium lauryl sulfate; alkylarylsulfonate salts, such as calcium dodecyl benzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkyl-naphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions used herein include, but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

### III. Methods of use

Methods of controlling undesirable vegetation comprising contacting the undesirable vegetation or locus thereof, including but not limited to foliage, soil or water, with a composition containing a mixture containing synergistic herbicidally effective amounts of (a) a compound of formula (I) or, with respect to its carboxylic acid moiety, an agriculturally acceptable salt, ester, or amide thereof; (b) fluroxypyr, or, with respect to its carboxylic acid moiety, an agriculturally acceptable salt, ester, or amide thereof; and (c) MCPA or an agriculturally acceptable salt, ester, or amide thereof.

In some embodiments, the methods provided herein are utilized to control undesirable vegetation in cereals. The undesirable vegetation is *Galeopsis tetrahit* (hemp-nettle GAETE), *Ambrosia artemisiifolia* L. (common ragweed, AMBEL), *Artemisia absinthium* (absinth wormwood, ARTAB), or *Brassica napus* (volunteer canola, BRSNN).

In some embodiments, the methods provided herein are utilized to control undesirable vegetation in range and pasture, IVM and rights-of-way. In certain embodiments, the undesirable vegetation is *Ambrosia artemisiifolia* L. (common ragweed, AMBEL).

In certain embodiments, the undesirable vegetation is *Ambrosia artemisiifolia* L. (common ragweed, AMBEL).

The methods are used to control AMBEL, ARTAB, BRSNN, and GAETE.

The combination of (a) the compound of formula (I) or an agriculturally acceptable ester, amide, or salt thereof, (b) fluroxypyr or an agriculturally acceptable ester, amide, or salt thereof, and (c) MCPA or agriculturally acceptable esters, amides, or salts thereof are used to control *Galeopsis tetrahit* (hemp-nettle, GAETE), *Ambrosia artemisiifolia* L. (common ragweed, AMBEL), absinth wormwood *(Artemisia absinthium,* ARTAB), or volunteer canola *(Brassica napus,* BRSNN).

The methods described herein can be used to control undesirable vegetation in glyphosate-tolerant-, glufosinate-tolerant-, dicamba-tolerant-, phenoxy auxin-tolerant-, pyridyloxy auxin-tolerant-, aryloxyphenoxypropionate-tolerant-, acetyl CoA carboxylase (ACCase) inhibitor-tolerant-, imidazolinone-tolerant-, acetolactate synthase (ALS) inhibitor-tolerant-, 4-hydroxyphenyl-pyruvate dioxygenase (HPPD) inhibitor-tolerant-, protoporphyrinogen oxidase (PPO) inhibitor-tolerant-, triazine-tolerant- and bromoxynil-tolerant crops, for example, in conjunction with glyphosate, glufosinate, dicamba, phenoxy auxins, pyridyloxy auxins, aryloxyphenoxypropionates, ACCase inhibitors, imidazolinones, ALS inhibitors, HPPD inhibitors, PPO inhibitors, triazines, and bromoxynil. The methods may be used in controlling undesirable vegetation in crops possessing multiple or stacked traits conferring tolerance to multiple chemistries and/or inhibitors of multiple modes of action. In some embodiments, the compound of formula (I) or derivative thereof and fluroxypyr or derivative thereof and a complementary herbicide or salt or ester thereof are used in combination with herbicides that

are selective for the crop being treated and which complement the spectrum of weeds controlled by these compounds at the application rate employed. In some embodiments, the compositions used herein and other complementary herbicides are applied at the same time, either as a combination formulation or as a tank mix.

The methods employing the combination of the compound of formula (I), fluroxypyr, and MCPA or agriculturally acceptable salts, esters, or amides of any of these components, and the compositions used herein may also be employed to control herbicide resistant or tolerant weeds. Exemplary resistant or tolerant weeds include, but are not limited to, biotypes resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to single or multiple herbicides, biotypes with resistance or tolerance to single or multiple chemical classes, biotypes with resistance or tolerance to single or multiple herbicide modes-of-action, and biotypes with single or multiple resistance or tolerance mechanisms (e.g., target site resistance or metabolic resistance).

The methods and compositions used herein can, further, be used in conjunction with glyphosate, glufosinate, dicamba, imidazolinones, sulfonylureas, triazolopyrimidines or 2,4-D on glyphosate-tolerant, glufosinate-tolerant, dicamba-tolerant, imidazolinone-tolerant, sulfonylurea-tolerant, triazolopyrimidine-tolerant or 2,4-D-tolerant crops. In one embodiment, the synergistic composition is used in combination with herbicides that are selective for the crop being treated and which complement the spectrum of weeds controlled by these compounds at the application rate employed. In another embodiment, the synergistic composition used herein and other complementary herbicides are applied at the same time, either as a combination formulation or as a tank mix, or sequentially. Similarly the herbicidal compounds of the present disclosure can be used in conjunction with acetolactate synthase inhibitors on acetolactate synthase inhibitor tolerant crops.

The described embodiments and following examples are for illustrative purposes.

## Examples

### Example 1. Evaluation of Herbicidal Activity of Mixtures under Field Conditions

#### Methodology

Nine small plot field trials were established across various ecozones in Alberta, Saskatchewan, Manitoba and Ontario, Canada, between 2011 and 2014 to evaluate potential synergy between 1) halauxifen-methyl (100 grams acid equivalent per kilogram (g ae/kg)), fluroxypyr-meptyl as Starane II EC (333 grams acid equivalent per liter (g ae/L) fluroxypyr), and MCPA 2-ethylhexyl ester (MCPA ester; 600 g ae/L), and 2) the halauxifen-methyl + fluroxypyr premix (16.25 g ae/L halauxifen-methyl and 250 g ae/L fluroxypyr-meptyl) and MCPA ester (600 g ae/L). In trials evaluating synergy between halauxifen-methyl, fluroxypyr-meptyl, and MCPA ester, actives were applied individually at rates of 6.5, 100, and 420 grams acid equivalent per hectare (g ae/ha), respectively, and in a three-way combination at identical rates. When applied individually, halauxifen-methyl was applied in all trials with Turbocharge adjuvant (50% mineral oil/39.5% surfactant blend) at 0.5% volume per volume (v/v). In trials evaluating synergy between the halauxifen-methyl + fluroxypyr premix, and MCPA ester, premix and MCPA ester were applied individually at rates of 82 g ae/ha (5 g ae/ha halauxifen-methyl + 77 g ae/ha fluroxypyr) or 106.5 g ae/ha (6.5 g ae/ha halauxifen-methyl + 100 g ae/ha fluroxypyr), and 350 or 420 g ae/ha MCPA ester, respectively, and in a two-way combination at rates of 82 g ae/ha premix + 350 g ae/ha MCPA ester or 106.5 g ae/L premix + 420 g ae/ha MCPA ester. When applied individually, the halauxifen-methyl + fluroxypyr premix was applied at a rate of 106.5 g ae/ha without an adjuvant, or at a rate of 82 g ae/ha with Turbocharge adjuvant at 0.5% v/v.

Trials were established as randomized complete blocks (RCBD) with four replicates. Individual treatments were 2-3 meters (m) wide and 10-11 m long. An untreated control was included in each trial. All trial sites had naturally occurring populations of weeds, which in some trials were augmented with additional weed seeds during trial establishment.

Herbicides were applied with backpack, bicycle, or tractor-mounted sprayers using carbon dioxide ($CO_2$) as a propellant. All sprayers delivered a uniform spray pattern that provided thorough coverage of the foliage using a water volume of 100-200 liters per hectare (L/ha). All herbicides were applied post-emergence in the spring to early-summer. At the time of herbicide applications, spring wheat, durum wheat, and winter wheat crops were at the four-leaf to three-node stage. Broadleaf weeds were at the seedling stage at the time of herbicide applications.

Evaluation

Foliar damage to target pest plants was visually assessed as percent control, compared to an untreated control plot. The assessments were based on a percent visual reduction in pest plant biomass and/or stand reduction of weed population. In general, three-to-four replicates were assessed for each treatment, and the results for each experiment (trial) are presented as overall average control. The efficacy of all treatments was assessed at 13-22 days after application (DAA) for an early season rating, 23-39 DAA for a mid-season rating, and 41-84 DAA for a late-season rating. The data were statistically analyzed using various statistical methods, generally including a Tukey's HSD Factorial Analysis of Variance with a significance level of 5%.

Colby's equation was used to determine the herbicidal effects expected from the mixtures (Colby, S. R. Calculation of the synergistic and antagonistic response of herbicide combinations. Weeds 1967 15, 20-22).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;
B = observed efficacy of active ingredient B at the same concentration as used in the mixture.

For mixtures containing three herbicidal active ingredients, the following equation can be used to calculate the expected activity:

$$\text{Expected} = 100 - \frac{(100-A)(100-B)(100-C)}{10{,}000}$$

A = observed efficacy of a first active ingredient at the same concentration as used in the mixture.
B = observed efficacy of a second active ingredient B at the same concentration as used in the mixture.
C = observed efficacy of a third active ingredient C at the same concentration as used in the mixture.

The results are summarized in Tables 1-3.

**Tables 1. Synergistic weed control from Spring applications of Halauxifen-methyl + Fluroxypyr-meptyl + MCPA ester in field trials.**

| **Table 1A: BRSNN and GAETE** | | | | | | | | |
|---|---|---|---|---|---|---|---|---|
| Halauxifen-methyl | Fluroxypyr-meptyl | MCPA ester | BRSNN | | | | GAETE | |
| | | | 14 DAA | | 33 DAA | | 14 DAA | |
| | | | SK | | | | AB | |
| g ae/ha | g ae/ha | g ae/ha | Obs | Exp | Obs | Exp | Obs | Exp |
| 6.5 | 0 | 0 | 20 | - | 15 | - | 79 | - |
| 0 | 100 | 0 | 30 | - | 20 | - | 39 | - |
| 0 | 0 | 420 | 80 | - | 95 | - | 31 | - |
| 6.5 | 100 | 420 | 90 | 89 | 98 | 97 | 95 | 91 |

BRSNN: canola, volunteer (*Brassica napus*)
GAETE: hemp-nettle (*Galeopsis tetrahit*)
Obs: Observed percent weed control
Exp: Expected percent weed control as predicted by Colby equation
AB: Alberta, Canada
SK: Saskatchewan, Canada
DAA: days after application

**Table 2. Synergistic weed control from Spring applications of the Halauxifen-methyl + Fluroxypyr-meptyl premix at 82 g ae/ha + MCPA ester in field trials.**

| Halauxifen-methyl + Fluroxypyr-meptyl | MCPA ester | AMBEL 28 DAA ON | |
|---|---|---|---|
| g ae/ha | g ae/ha | Obs | Exp |
| 5+77 | 0 | 35 | - |
| 0 | 350 | 15 | - |
| 5+77 | 350 | 64 | 45 |

AMBEL: ragweed, common *(Ambrosia artemisiifolia)*
g ae/ha: grams acid equivalent per hectare
DAA: days after appplicaiton
Obs: Observed percent weed control
Exp: Expected percent weed control as predicted by Colby equation
MB: Manitoba, Canada
ON: Ontario, Canada

**Tables 3: Synergistic weed control from Spring applications of the Halauxifen-methyl + Fluroxypyr-meptyl premix at 106.5 g ae/ha + MCPA ester in field trials.**

| Halauxifen - methyl + Fluroxypyr-meptyl | MCPA ester | ARTAB 47 DAA MB | | BRSNN 33 DAA SK | | GAETE 14 DAA AB | |
|---|---|---|---|---|---|---|---|
| g ae/ha | g ae/ha | Obs | Exp | Obs | Exp | Obs | Exp |
| 6.5+100 | 0 | 0 | - | 35 | - | 70 | - |
| 0 | 420 | 0 | - | 95 | - | 31 | - |
| 6.5+100 | 420 | 33 | 0 | 98 | 97 | 95 | 79 |

ARTAB: absinth wormwood (*Artemisia absinthium*)
BRSNN: canola, volunteer (*Brassica napus*)
GAETE: hemp-nettle (*Galeopsis tetrahit*)
g ae/ha: grams acid equivalent per hectare
Obs: Observed percent weed control
Exp: Expected percent weed control as predicted by Colby equation
AB: Alberta, Canada
SK: Saskatchewan, Canada
MB: Manitoba, Canada
DAA: days after aplication

The term "comprising" and variations thereof as used herein is used synonymously with the term "including" and variations thereof and are open, non-limiting terms. Although the terms "comprising" and "including" have been used herein to describe various embodiments, the terms "consisting essentially of" and "consisting of" can be used in place of "comprising" and "including" to provide for more specific embodiments of the invention and are also disclosed. Other than in the examples, or where otherwise noted, all numbers expressing quantities of ingredients, reaction conditions, and so forth used in the specification and claims are to be understood at the very least to be construed in light of the number of significant digits and ordinary rounding approaches.

## Claims

1. A method of controlling undesirable vegetation comprising contacting the undesirable vegetation, the area adjacent to the undesirable vegetation, water or soil with a herbicidally effective amount of

   (a) a compound of the formula (I):

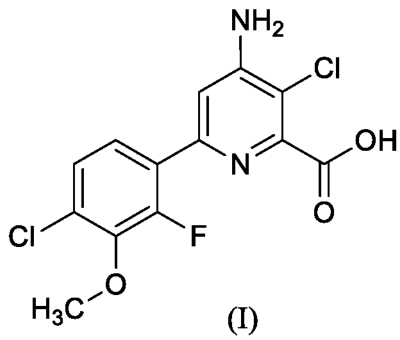

(I)

   or, with respect to its carboxylic acid moiety, an agriculturally acceptable salt, ester, or amide thereof,
   (b) fluroxypyr, or, with respect to its carboxylic acid moiety, an agriculturally acceptable ester, amide, or salt thereof, and
   (c) one or more phenoxy auxins or an agriculturally acceptable ester, amide, or salt thereof,

   wherein the phenoxy auxin is MCPA and the carboxylic acid equivalent weight ratio of (a) to (b) to (c) is from 1:12:60 to 1:18:80, and
   wherein the undesirable vegetation is hemp-nettle (*Galeopsis tetrahit,* GAETE), common ragweed *(Ambrosia artemisiifolia,* AMBEL), absinth wormwood (*Artemisia absinthium*, ARTAB), or volunteer canola *(Brassica napus,* BRSNN).

2. The method of claim 1, wherein a herbicidally effective amount of a composition comprising a mixture comprising a herbicidally effective amount of (a), (b) and (c) is used.

3. The method of claim 2, wherein the composition further comprises a herbicide safener, wherein preferably the safener is cloquintocet acid or cloquintocet mexyl.

4. The method of any of claims 2-3, wherein (b) is fluroxypyr-meptyl.

5. The method of any of claims 2-4, wherein (c) is MCPA 2-ethylhexyl ester.

6. The method of any of claims 1-5, wherein the composition is applied pre-emergently or post-emergently.

7. The method of any of claims 1-6, wherein (a) is the methyl ester of the compound of formula (I), (b) is fluroxypyr-meptyl, and (c) is MCPA 2-ethylhexyl ester.

8. The method of claim 7, wherein the composition is applied at a use rate of 5 grams carboxylic acid equivalent weight per hectare (g ae/ha) of (a), 77 g ae/ha of (b), and 350 g ae/ha of (c).

## Patentansprüche

1. Ein Verfahren zur Bekämpfung unerwünschter Vegetation umfassend das Inkontaktbringen der unerwünschten Vegetation, einer an die unerwünschte Vegetation angrenzenden Fläche, von Wasser oder Boden mit einer herbizid wirksamen Menge von

   (a) einer Verbindung der Formel (I):

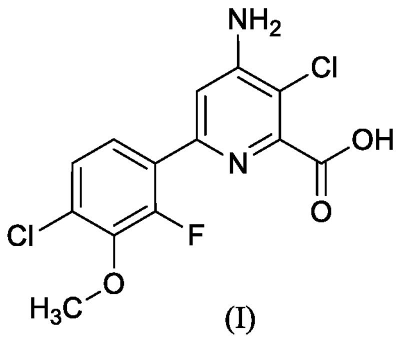

(I)

oder, bezogen auf ihre Carbonsäuregruppe, einem landwirtschaftlich akzeptablen Salz, Ester oder Amid davon,
(b) Fluroxypyr oder, bezogen auf seine Carbonsäuregruppe, einem landwirtschaftlich akzeptablen Ester, Amid oder Salz davon und
(c) einem oder mehreren Phenoxyauxin(en) oder einem landwirtschaftlich akzeptablen Ester, Amid oder Salz davon,

wobei das Phenoxyauxin MCPA ist und das Carbonsäureäquivalentgewichtsverhältnis von (a) zu (b) zu (c) von 1:12:60 bis 1:18:80 beträgt und wobei die unerwünschte Vegetation Gemeiner Hohlzahn (*Galeopsis tetrahit*, GAETE), beifußblättrige Ambrosie (*Ambrosia artemisiifolia*, AMBEL), Wermutkraut (*Artemisia absinthium*, ARTAB) oder Ausfallraps *(Brassica napus,* BRSNN) ist.

**2.** Das Verfahren gemäß Anspruch 1, wobei eine herbizid wirksame Menge einer Zusammensetzung umfassend eine Mischung umfassend eine herbizid wirksame Menge von (a), (b) und (c) verwendet wird.

**3.** Das Verfahren gemäß Anspruch 2, wobei die Zusammensetzung des Weiteren einen Herbizid-Safener umfasst, wobei der Safener vorzugsweise Cloquintocetsäure oder Cloquintocet-Mexyl ist.

**4.** Das Verfahren gemäß irgendeinem der Ansprüche 2-3, wobei (b) Fluroxypyr-Meptyl ist.

**5.** Das Verfahren gemäß irgendeinem der Ansprüche 2-4, wobei (c) MCPA-2-ethylhexylester ist.

**6.** Das Verfahren gemäß irgendeinem der Ansprüche 1-5, wobei die Zusammensetzung im Vorauflauf oder Nachauflauf angewandt wird.

**7.** Das Verfahren gemäß irgendeinem der Ansprüche 1-6, wobei (a) der Methylester der Verbindung der Formel (I) ist, (b) Fluroxypyr-Meptyl ist und (c) MCPA-2-ethylhexylester ist.

**8.** Das Verfahren gemäß Anspruch 7, wobei die Zusammensetzung in einer Anwendungsmenge von 5 g Carbonsäureäquivalentgewicht pro Hektar (g ae/ha) an (a), 77 g ae/ha an (b) und 350 g ae/ha an (c) angewandt wird.

## Revendications

**1.** Procédé de lutte contre une végétation indésirable, comprenant le fait de mettre la végétation indésirable, la zone adjacente à la végétation indésirable, l’eau ou le sol en contact avec une quantité à effet herbicide de

(a) un composé de formule (I) :

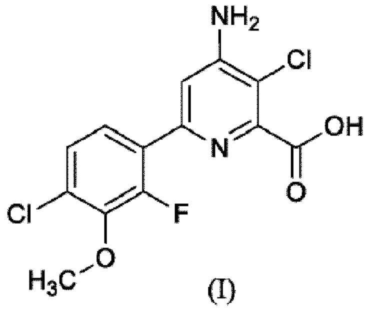

(I)

ou, eu égard à son fragment acide carboxylique, un sel, ester, ou amide acceptable en agriculture d'un tel composé,

(b) fluroxypyr, ou, eu égard à son fragment acide carboxylique, un ester, amide, ou sel acceptable en agriculture de celui-ci, et

(c) une ou plusieurs phénoxyauxine(s) ou un ester, amide, ou sel acceptable en agriculture de telle(s) phénoxyauxine(s),

dans lequel la phénoxyauxine est le MCPA et le rapport pondéral d'équivalents d'acides carboxyliques de (a) à (b) à (c) vaut de 1:12:60 à 1:18:80, et
dans lequel la végétation indésirable est le galéopside à tige carrée (*Galeopsis tetrahit*, GAETE), l'ambroisie à feuilles d'armoise (*Ambrosia artemisiifolia*, AMBEL), l'absinthe (*Artemisia absinthium,* ARTAB), ou le colza canola spontané (*Brassica napus*, BRSNN).

2. Procédé selon la revendication 1, dans lequel on utilise une quantité à effet herbicide d'une composition comprenant un mélange comprenant une quantité à effet herbicide de (a), (b) et (c).

3. Procédé selon la revendication 2, dans lequel la composition comprend en outre un phytoprotecteur contre les herbicides, le phytoprotecteur étant de préférence le cloquintocet acide ou le cloquintocet mexyle.

4. Procédé selon l'une quelconque des revendications 2 et 3, dans lequel (b) est le fluroxypyr-meptyle.

5. Procédé selon l'une quelconque des revendications 2 à 4, dans lequel (c) est l'ester 2-éthylhexylique de MCPA.

6. Procédé selon l'une quelconque des revendications 1 à 5, dans lequel on applique la composition en pré-levée ou en post-levée.

7. Procédé selon l'une quelconque des revendications 1 à 6, dans lequel (a) est l'ester méthylique du composé de formule (I), (b) est le fluoroxypyr-meptyle, et (c) est l'ester 2-éthylhexylique de MCPA.

8. Procédé selon la revendication 7, dans lequel on applique la composition à un taux d'utilisation de 5 grammes de poids d'équivalent d'acide carboxylique par hectare (g éa/ha) de (a), 77 g éa/ha de (b), et 350 g éa/ha de (c).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61927829
- US 20130143739 A1
- US 20130143738 A1
- WO 2015054561 A1
- WO 2015054560 A1
- WO 2009029518 A2
- CN 101662990
- CN 103053554
- US 7314849 B2


### Non-patent literature cited in the description


- The Pesticide Manual: A World Compendium. BCPC
- **ALTON.** The Pesticide Manual. 2009
- The Pesticide Manual. 2009
- an interaction of two or more factors such that the effect when combined is greater than the predicted effect based on the response of each factor applied separately. Herbicide Handbook. Weed Science Society of America, 2014
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corporation, 1998
- Encyclopedia of Surfactants. Chemical Publishing Company, vol. I-III, 1980-81